# FASCICULE DE BREVET EUROPEEN

(11) **EP 0 747 554 B1**
(45) Date de publication et mention de la délivrance du brevet: **03.02.1999**
(21) Numéro de dépôt: 96401113.4
(22) Date de dépôt: 22.05.1996
(51) Int. Cl.: E05B 63/12, B60N 2/00

(54) **Verrou destiné notamment à la fixation d'un siège pour véhicule automobile sur un plancher de ce véhicule**
Verriegelung, inbesondere zum Befestigen eines Autositzes am Kraftfahrzeugboden
Lock, in particular for fixing a carseat to the car floor

(30) Priorité: 09.06.1995 FR 9506868
(43) Date de publication de la demande: 11.12.1996
(73) Titulaire: CESA COMPAGNIE EUROPEENNE DE SIEGES POUR AUTOMOBILES, 92307 Levallois-Perret Cédex (FR)
(72) Inventeur: Sylvain, Harry, 45290 Nogent-sur-Vernisson (FR)
(74) Mandataire: Moncheny, Michel

(56) Documents cités:
- EP-A- 0 605 270
- EP-A- 0 716 950
- DE-A- 2 343 071
- DE-A- 4 124 868
- FR-A- 2 105 523
- FR-A- 2 699 973
- US-A- 1 510 445

## Description

La présente invention concerne un verrou destiné notamment à la fixation d'un siège pour véhicule automobile sur un plancher de ce véhicule.

On connaît déjà dans l'état de la technique, notamment d'après FR-A-2 699 973, un verrou du type comprenant un pêne muni d'un corps de verrouillage de forme générale cylindrique destiné à être verrouillé par encliquetage dans un orifice de verrouillage de forme complémentaire ménagé dans une gâche.

Un verrou de ce type permet par exemple d'accrocher de façon amovible un siège sur le plancher de l'habitacle d'un véhicule automobile du type monocorps. Dans ce cas, le verrou est agencé de manière que le pêne soit solidaire d'un pied du siège et la gâche soit solidaire du plancher.

Certains sièges amovibles, comportant quatre pieds d'accrochage, peuvent être repliés dans une configuration d'encombrement au sol réduit dans laquelle deux pieds seulement sont accrochés au plancher au moyen de verrous du type précité. Dans ce cas, lors des déplacements du véhicule, les verrous sont soumis à d'importantes contraintes mécaniques, du fait notamment que les sièges, d'un poids relativement important, sont en équilibre instable dans leur configuration d'encombrement au sol réduit. Ces contraintes peuvent provoquer à la longue une usure des verrous, en particulier par matage du pêne et de la gâche au niveau de leurs zones de contact, cette usure risquant de nuire au bon fonctionnement des verrous.

DE-A-23 43 071 décrit un verrou, du même type que celui de FR-A-2 699 973, comprenant des billes de verrouillage logées dans le corps de verrouillage. Les billes sont maintenues dans leur logement par au moins une bague entourant le corps de verrouillage. Cette bague est en retrait par rapport à la surface externe du corps si bien qu'elle ne peut pas être en contact avec le contour de l'orifice de verrouillage.

L'invention a pour but de proposer un verrou résistant bien à l'usure, simple à fabriquer et économique.

A cet effet, l'invention a pour objet un verrou du type précité, caractérisé en ce que le pêne comporte de plus une bague anti-matage entourant une zone du corps de verrouillage qui, lorsque le pêne est verrouillé, est en contact avec le contour de l'orifice de verrouillage.

Suivant d'autres caractéristiques de l'invention:
- l'orifice de verrouillage s'étend entre deux faces opposées de la gâche, le corps de verrouillage est muni de moyens d'encliquetage libérables comprenant des moyens d'appui axial, destinés à coopérer avec une première face de la gâche, et au moins une bille de verrouillage escamotable, destinée à coopérer avec la seconde face de la gâche, et lorsque le pêne est verrouillé, la bague anti-matage s'étend axialement entre les moyens d'appui et la bille, en étant adjacente à la première face de la gâche ;
- le pêne comporte en outre des moyens de déplacement radial de la bille entre une position escamotée de libération du pêne et une position saillante de verrouillage de ce pêne vers laquelle la bille est sollicitée élastiquement et dans laquelle la bille coopère avec la seconde face de la gâche, les moyens d'appui axial comprennent une douille d'appui montée coulissante axialement autour du corps de verrouillage et de la bague anti-matage en étant déplaçable à l'encontre d'une force élastique de rappel de cette douille depuis une position de libération du pêne, dans laquelle la douille recouvre la bille en la retenant en position escamotée, vers une position de verrouillage du pêne, dans laquelle la douille est écartée axialement de la bille, cette dernière étant en position saillante, et la bague anti-matage comporte des moyens de retenue de la douille d'appui dans sa position de libération du pêne ;
- les moyens de retenue comprennent des butées axiales complémentaires ménagées sur des surfaces en regard de la bague anti-matage et de la douille ;
- les butées complémentaires comprennent au moins une saillie radiale qui est ménagée dans la surface externe de la bague et un épaulement qui est ménagé dans la surface interne de la douille d'appui et qui délimite une extrémité d'un chambrage de dégagement de la saillie radiale ;
- la saillie radiale est délimitée par une patte découpée dans la bague anti-matage et repliée vers l'extérieur de celle-ci ;
- la bague anti-matage comporte deux pattes diamétralement opposées ;
- les moyens d'encliquetage comprennent cinq billes espacées angulairement ;
- la bague anti-matage est en acier à ressort.

L'invention a également pour objet un agencement d'un verrou tel que défini ci-dessus, caractérisé en ce que le pêne est solidaire d'un pied d'un siège pour véhicule automobile et la gâche est solidaire d'un plancher du véhicule.

L'invention sera mieux comprise à la lecture de la description qui va suivre donnée uniquement à titre d'exemple, faite en se référant aux dessins annexés dans lesquels :
- la figure 1 est une vue en perspective, avec un arrachement, d'un verrou selon l'invention ;
- la figure 2 est une vue en coupe axiale du verrou de la figure 1, dans laquelle le pêne est libéré;
- la figure 3 est une vue similaire à la figure 2, dans laquelle le pêne est verrouillé ;
- la figure 4 est une vue en perspective de la bague anti-matage.

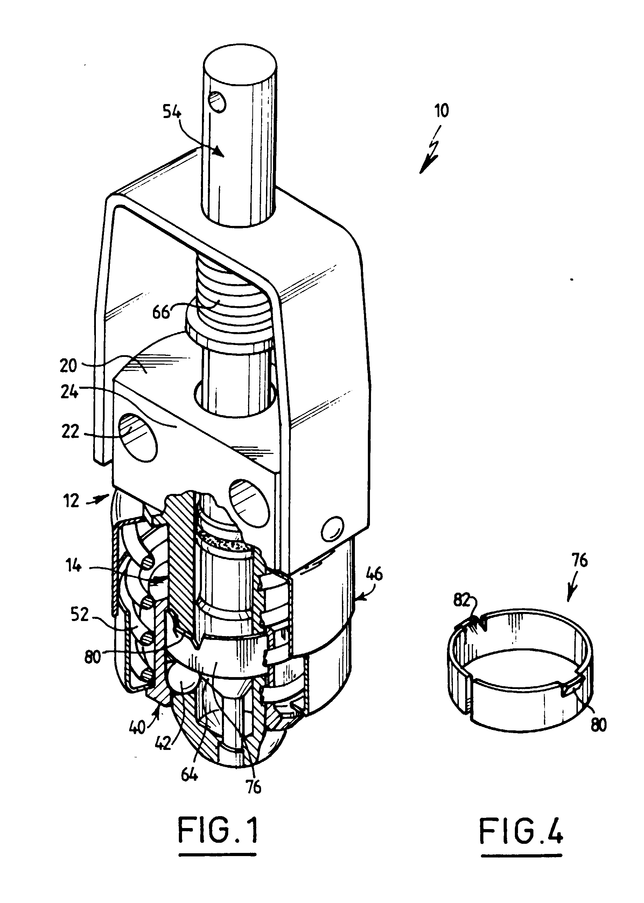

On a représenté sur les figures 1 à 3 un verrou selon l'invention, désigné par la référence générale 10, destiné à fixer un siège amovible pour véhicule automobile sur le plancher de l'habitacle du véhicule.

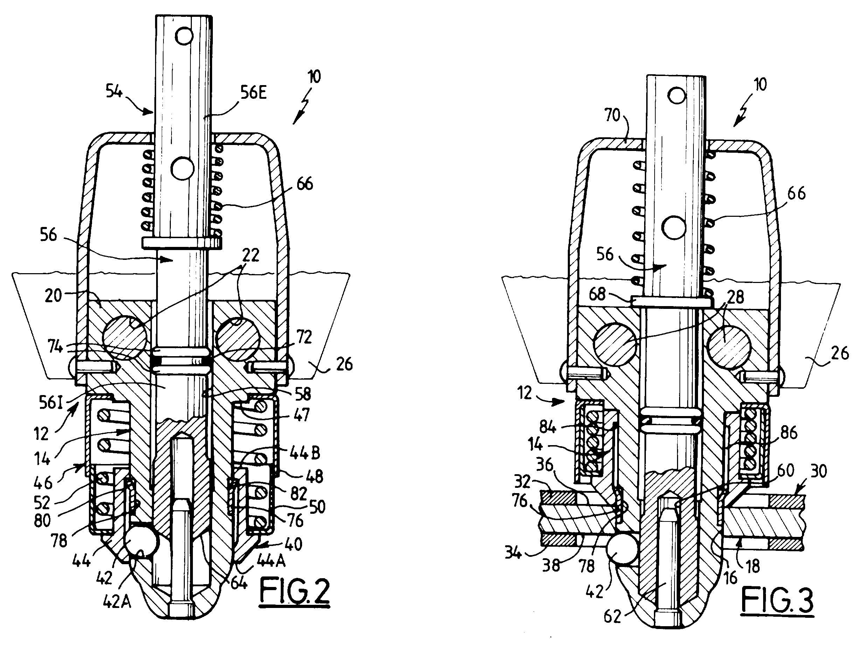

Le verrou 10 comprend un pêne 12 muni d'un corps de verrouillage 14 en forme générale de broche cylindrique, destiné à être verrouillé par encliquetage dans un orifice de verrouillage 16 de forme complémentaire, ménagé dans une gâche 18 illustrée à la figure 3.

Le corps de verrouillage 14 comporte une tête de fixation 20 munie de deux perçages transversaux 22 débouchant dans deux méplats opposés 24, un seul de ces méplats étant visible sur la figure 1. La tête 20 est accrochée à une extrémité 26 d'un pied du siège, représentée aux figures 2 et 3, par des moyens connus en soi, par exemple des rivets 28 logés dans les perçages 22.

La gâche 18 a une forme générale de plaque. Elle est fixée de façon connue en soi au plancher 30 du véhicule, par exemple entre deux parois 32,34 délimitant ce dernier.

L'orifice de verrouillage 16 s'étend entre deux faces opposées 36,38 de la gâche.

Le corps de verrouillage 14 est muni de moyens d'encliquetage libérables comprenant des moyens 40 d'appui axial destinés à coopérer avec une première face 36 de la gâche, dite face d'appui, et des billes de verrouillage escamotables 42, dont une seule est représentée sur les figures, destinées à coopérer avec la seconde face 38 de la gâche, dite face de verrouillage.

Dans l'exemple décrit, le pêne 12 comporte cinq billes 42 logées dans des canaux radiaux 42A espacés angulairement, ménagés dans le corps de verrouillage 14. En variante, le pêne 12 peut comporter un plus petit ou plus grand nombre de billes.

Les moyens d'appui axial 40 comprennent une douille d'appui 44 montée coulissante axialement autour du corps de verrouillage 14, reliée à un boîtier annulaire télescopique 46 entourant le corps 14.

La douille 44 comporte une première extrémité d'appui 44A, destinée à coopérer avec la face d'appui 36 de la gâche, et une seconde extrémité de blocage 44B, destinée à coopérer avec un épaulement de blocage 47 ménagé dans le corps de verrouillage 14.

Le boîtier 46 comporte deux demi-boîtiers 48,50 emboîtés l'un dans l'autre, dont l'un, fixe, est solidaire du corps de verrouillage 14, et l'autre, mobile, est solidaire de la douille 44.

Les demi-boîtiers 48,50 forment des sièges d'appui pour un ressort de rappel 52 logé dans le boîtier, sollicitant la douille 44 vers une position de libération du pêne 12 qui sera décrite ultérieurement de même que des moyens de retenue de la douille 44 dans cette position.

Le pêne 12 comprend en outre des moyens 54 de déplacement radial des billes 42 entre une position escamotée de libération du pêne 12 et une position saillante de verrouillage de ce pêne, dans laquelle les billes coopèrent avec la face de verrouillage 38 de la gâche.

Ces moyens de déplacement 54 comportent une aiguille 56 montée coulissante dans un alésage axial borgne 58 ménagé dans le corps de verrouillage 14 de façon à communiquer avec les canaux 42A. L'aiguille 56 s'étend partiellement à l'extérieur de l'alésage 58.

L'extrémité interne 56I de l'aiguille est munie d'un trou axial borgne 60 dans lequel est reçu un doigt axial 62 fixé dans le fond de l'alésage 58. Le doigt 62 assure à la fois le guidage axial de l'aiguille 56 et le maintien des billes 42 dans leurs canaux lorsque celles-ci sont en position escamotée.

L'extrémité interne 56I est délimitée par une surface tronconique 64 convergeant vers le fond de l'alésage 58, de manière à former une rampe destinée à coopérer avec les billes 42 pour les solliciter radialement vers leur position saillante.

L'aiguille 56 est sollicitée élastiquement vers le fond de l'alésage 58, de manière à déplacer les billes 42 vers leur position saillante, par un ressort de rappel 66 entourant l'extrémité externe 56E de l'aiguille. Ce ressort 66 s'appui, d'une part, sur un collet 68 de limitation de l'enfoncement de l'aiguille 56 dans l'alésage 58, venu de matière avec l'extrémité externe 56E, et d'autre part, sur un siège passant 70, traversé par l'aiguille 56, délimité par un étrier riveté sur la tête 20.

On a également représenté sur les figures, un joint torique 72 d'étanchéité agencé autour de l'extrémité interne 56I de l'aiguille dans une gorge délimitée par deux saillies annulaires 74 de cette aiguille.

Une bague anti-matage 76, représentée en détail à la figure 4, est logée dans une gorge annulaire 78 ménagée dans la surface externe du corps de verrouillage 14, de manière que la surface externe de la bague 76 affleure la surface externe du corps 14 et soit entourée par la douille 44.

La bague 76 est de préférence fendue de manière à permettre son montage par emmanchement et expansion élastique autour du corps de verrouillage 14, puis par encliquetage dans la gorge 78.

La bague 76 est fabriquée dans un matériau de dureté sensiblement intermédiaire entre celle du corps de verrouillage 14 et celle de la gâche 18, de préférence en acier à ressort.

La bague 76 comporte deux pattes 80,82 diamétralement opposées, découpées dans la bague et repliées vers l'extérieur de celle-ci de manière à former des saillies radiales de retenue de la douille 44 en position de libération du pêne 12.

Les pattes 80,82 sont destinées à coopérer avec un épaulement 84 qui est ménagé dans la surface interne de la douille 44 et qui délimite une extrémité d'un chambrage 86 de dégagement des pattes.

En variante, la bague 76 peut comporter une seule patte ou plus de deux pattes. Par ailleurs, les pattes 80,82 peuvent être remplacées par toute autre saillie radiale ménagée sur la surface externe de la bague 76.

Le fonctionnement du verrou 10 est très simple et permet l'encliquetage automatique du pêne 12 dans la gâche 18, comme cela sera précisé ci-dessous.

On considère tout d'abord le verrou 10 dans la configuration initiale représentée aux figures 1 et 2, dans laquelle il est déverrouillé.

Dans cette configuration, la douille 44 est dans une position de libération du pêne 12 dans laquelle elle recouvre et protège les billes 42 en les retenant en position escamotée. Les pattes 80,82 butent contre l'épaulement 84 de manière à retenir la douille 44 dans cette position en s'opposant à la force élastique de rappel du ressort 52. Les billes 42 coopèrent avec la rampe 64 de manière à maintenir l'aiguille 56 dans une position d'attente.

Pour verrouiller le pêne 12, on enfonce le corps de verrouillage 14 dans l'orifice de verrouillage 16 en poussant le pêne 12 vers la gâche 18. La face d'appui 36 de la gâche coopère alors avec l'extrémité d'appui 44A de la douille en sollicitant cette douille à l'encontre de la force élastique du ressort 52.

La douille 44 est ainsi déplacée jusqu'à une position de verrouillage du pêne 12 représenté à la figure 3, dans laquelle l'extrémité de blocage 44B de la douille est en butée contre l'épaulement de blocage 47 du corps 14.

La douille 44 étant écartée axialement des billes 42, ces dernières sont libérées. Sous l'effet de la force élastique de rappel du ressort 66, l'aiguille 56 s'enfonce dans l'alésage 58 et la rampe 64 déplace les billes 42 vers leur position saillante de verrouillage du pêne. L'aiguille 56 est immobilisée, par coopération du collet 68 avec la tête 20, dans une position active dans laquelle les billes 42 coopèrent avec le contour de l'aiguille 56 prolongeant axialement l'extrémité de grand diamètre de la rampe 64. Le verrouillage du pêne est irréversible, sauf à déplacer volontairement l'aiguille 56 comme cela sera précisé ultérieurement.

L'enfoncement et le verrouillage du pêne 12 dans la gâche 18 se font à l'encontre de la force élastique de rappel du ressort 52 de la douille. Toutefois, le poids du siège portant le pêne permet de compenser, au moins en partie, cette force élastique.

En se référant à la figure 3, on notera que, lorsque le pêne 12 est verrouillé, la bague anti-matage 76 entoure une zone du corps de verrouillage qui serait en contact avec le contour de l'orifice de verrouillage en l'absence de la bague. Plus précisément, la bague 76 s'étend axialement entre l'extrémité d'appui 44A de la douille et les billes 42, en étant adjacente à la face d'appui 36 de la gâche.

Pour déverrouiller le pêne 12, il suffit de tirer l'extrémité externe 56E de l'aiguille à l'encontre de la force élastique de rappel du ressort 66, à l'aide d'un organe de commande classique (non représenté sur les figures) relié de façon connue en soi à l'aiguille 56.

On place ainsi la rampe 64 au droit des billes 42 qui peuvent alors s'escamoter. Le ressort 52 sollicite le pêne 12 à l'écart de la gâche 18 en repoussant la douille 44 vers sa position de libération du pêne représentée aux figures 1 et 2. La douille 44 a dans ce cas une fonction d'éjecteur.

L'invention ne se limite pas au mode de réalisation illustré sur les figures.

En particulier, les pattes 80,82 et l'épaulement 84 de retenue de la douille 44 peuvent être remplacés par toutes autres butées axiales complémentaires ménagées sur des surfaces en regard de la bague 76 et de la douille 44.

L'invention comporte de nombreux avantages.

En particulier, la bague anti-matage est simple à fabriquer et d'un coût réduit. Elle est agencée dans la partie sensible à l'usure du corps de verrouillage.

Ainsi, la bague anti-matage fabriquée dans un acier très résistant permet de protéger le corps de verrouillage dans sa zone de contact avec la gâche et de répartir les contraintes mécaniques exercées par la gâche sur le corps de verrouillage.

Par ailleurs, la bague anti-matage permet de retenir la douille d'appui dans sa position de libération du pêne.

## Revendications

1. Verrou du type comprenant un pêne muni d'un corps de verrouillage (14) de forme générale cylindrique destiné à être verrouillé par encliquetage dans un orifice de verrouillage de forme complémentaire ménagé dans une gâche (18), caractérisé en ce que le pêne (12) comporte de plus une bague anti-matage (76) entourant une zone du corps de verrouillage (14) qui, lorsque le pêne (12) est verrouillé, est en contact avec le contour de l'orifice de verrouillage (16).

2. Verrou selon la revendication 1, caractérisé en ce que l'orifice de verrouillage (16) s'étend entre deux faces opposées (36,38) de la gâche, en ce que le corps de verrouillage (14) est muni de moyens d'encliquetage libérables comprenant des moyens (40) d'appui axial, destinés à coopérer avec une première face (36) de la gâche, et au moins une bille de verrouillage escamotable (42), destinée à coopérer avec la seconde face (38) de la gâche, et en ce que lorsque le pêne (12) est verrouillé, la bague anti-matage (76) s'étend axialement entre les moyens d'appui (40) et la bille (42), en étant adjacente à la première face (36) de la gâche.

3. Verrou selon la revendication 2, caractérisé en ce que le pêne (12) comporte en outre des moyens (54) de déplacement radial de la bille (42) entre une position escamotée de libération du pêne (12) et une position saillante de verrouillage de ce pêne vers laquelle la bille est sollicitée élastiquement et dans laquelle la bille coopère avec la seconde face (38) de la gâche, en ce que les moyens d'appui axial comprennent une douille d'appui (44) montée coulissante axialement autour du corps de verrouillage (14) et de la bague anti-matage (76) en étant déplaçable à l'encontre d'une force élastique de rappel de cette douille depuis une position de libération du pêne, dans laquelle la douille (44) recouvre la bille (42) en la retenant en position escamotée, vers une position de verrouillage du pêne (12), dans laquelle la douille (44) est écartée axialement de la bille (42), cette dernière étant en position saillante, et en ce que la bague anti-matage (76) comporte des moyens (80 à 84) de retenue de la douille d'appui (44) dans sa position de libération du pêne (12).

4. Verrou selon la revendication 3, caractérisé en ce que les moyens de retenue comprennent des butées axiales complémentaires (80 à 84) ménagées sur des surfaces en regard de la bague anti-matage (76) et de la douille (44).

5. Verrou selon la revendication 4, caractérisé en ce que les butées complémentaires comprennent au moins une saillie radiale (80,82) qui est ménagée dans la surface externe de la bague (76) et un épaulement (84) qui est ménagé dans la surface interne de la douille d'appui (44) et qui délimite une extrémité d'un chambrage (86) de dégagement de la saillie radiale (80,82).

6. Verrou selon la revendication 5, caractérisé en ce que la saillie radiale (80,82) est délimitée par une patte découpée dans la bague anti-matage (76) et repliée vers l'extérieur de celle-ci.

7. Verrou selon la revendication 6, caractérisé en ce que la bague anti-matage (76) comporte deux pattes (80,82) diamétralement opposées.

8. Verrou selon l'une quelconque des revendications 2 à 7, caractérisé en ce que les moyens d'encliquetage comprennent cinq billes (42) espacées angulairement.

9. Verrou selon l'une quelconque des revendications précédentes, caractérisé en ce que la bague anti-matage (76) est en acier à ressort.

10. Agencement d'un verrou selon l'une quelconque des revendications précédentes, caractérisé en ce que le pêne (12) est solidaire d'un pied (26) d'un siège pour véhicule automobile et la gâche est solidaire d'un plancher (30) du véhicule.

## Patentansprüche

1. Verriegelung des Typs, der einen Riegel enthält, der mit einem Verriegelungskörper (14) mit im allgemeinen zylindrischer Form versehen ist, der dazu bestimmt ist, durch Einrasten in eine Verriegelungsöffnung mit komplementärer Form, die in einer Schließplatte (18) ausgebildet ist, verriegelt zu werden, dadurch gekennzeichnet, daß der Riegel (12) außerdem einen Verkantungsverhinderungsring (76) enthält, der eine Zone des Verriegelungskörpers (14) umgibt, die dann, wenn der Riegel (12) verriegelt ist, mit dem Umfang der Verriegelungsöffnung (16) in Kontakt ist.

2. Verriegelung nach Anspruch 1, dadurch gekennzeichnet, daß die Verriegelungsöffnung (16) sich zwischen zwei gegenüberliegenden Flächen (36, 38) der Schließplatte erstreckt, daß der Verriegelungskörper (14) mit freigebbaren Einrastmitteln versehen ist, die axiale Abstützmittel (40), die dazu bestimmt sind, mit einer ersten Fläche (36) der Schließplatte zusammenzuwirken, und wenigstens eine versenkbare Verriegelungskugel (42) enthalten, die dazu bestimmt ist, mit der zweiten Fläche (38) der Schließplatte zusammenzuwirken, und daß der Verkantungsverhinderungsring (76) dann, wenn der Riegel (12) verriegelt ist, sich axial zwischen den Abstützmitteln (40) und der Kugel (42) erstreckt und dabei an die erste Fläche (36) der Schließplatte angrenzt.

3. Verriegelung nach Anspruch 2, dadurch gekennzeichnet, daß der Riegel (12) außerdem Mittel (54) zur radialen Verschiebung der Kugel (42) zwischen einer versenkten Position zur Freigabe des Riegels (12) und einer vorstehenden Position zur Verriegelung dieses Riegels enthält, in welcher die Kugel elastisch belastet ist und mit der zweiten Fläche (38) der Schließplatte zusammenwirkt, daß die axialen Abstützmittel eine Abstützhülse (44) enthalten, die um den Verriegelungskörper (14) und den Verkantungsverhinderungsring (76) axial gleitend angebracht sind und dabei entgegen einer elastischen Rückstellkraft dieser Hülse aus einer Riegelfreigabeposition, in der die Hülse (44) die Kugel (42) bedeckt und in der versenkten Position hält, in eine Position zur Verriegelung des Riegels (12), in der die Hülse (44) von der Kugel (42) axial beabstandet ist, verschiebbar ist, wobei sich die Kugel dann in der vorstehenden Position befindet, und daß der Verkantungsverhinderungsring (76) Mittel (80 bis 84) zum Halten der Abstützhülse (44) in ihrer Position zur Freigabe des Riegels (12) enthält.

4. Verriegelung nach Anspruch 3, dadurch gekennzeichnet, daß die Haltemittel komplementäre axiale Anschläge (80 bis 84) umfassen, die in den Oberflächen gegenüber dem Verkantungsverhinderungsring (76) und der Hülse (44) ausgebildet sind.

5. Verriegelung nach Anspruch 4, dadurch gekennzeichnet, daß die komplementären Anschläge wenigstens einen radialen Vorsprung (80, 82), der in der äußeren Oberfläche des Rings (76) ausgebildet ist, und eine Schulter (84) umfassen, die in der inneren Oberfläche der Abstützhülse (44) ausgebildet ist und ein Ende einer zurückversetzten Umschließung (86) des radialen Vorsprungs (80, 82) begrenzt.

6. Verriegelung nach Anspruch 5, dadurch gekennzeichnet, daß der radiale Vorsprung (80, 82) durch einen Haken begrenzt ist, der in dem Verkantungsverhinderungsring (76) ausgeschnitten ist und in dessen äußere Umgebung gebogen ist.

7. Verriegelung nach Anspruch 6, dadurch gekennzeichnet, daß der Verkantungsverhinderungsring (76) zwei diametral gegenüberliegende Haken (80, 82) enthält.

8. Verriegelung nach irgendeinem der Ansprüche 2 bis 7, dadurch gekennzeichnet, daß die Einrastmittel fünf Kugeln (42) enthalten, die in Winkelrichtung beabstandet sind.

9. Verriegelung nach irgendeinem der vorangehenden Ansprüche, dadurch gekennzeichnet, daß der Verkantungsverhinderungsring (76) aus Federstahl besteht.

10. Anordnung einer Verriegelung nach irgendeinem der vorangehenden Ansprüche, dadurch gekennzeichnet, daß der Riegel (12) mit einem Fuß (26) eines Sitzes für ein Kraftfahrzeug fest verbunden ist und die Schließplatte mit einem Boden (30) des Fahrzeugs fest verbunden ist.

## Claims

1. Locking mechanism of the type comprising a bolt assembly provided with a generally cylindrical locking member (14) intended to be locked by latching in a locking orifice of complementary shape provided in a keeper (18), characterised in that the bolt assembly (12) further comprises an anti-jagging ring (76) surrounding the zone of the locking body (14) which, when the bolt assembly (12) is secured, is in contact with the periphery of the locking orifice (16).

2. Locking mechanism according to claim 1,
characterised in that the locking orifice (16) extends between two opposite sides (36, 38) of the keeper, in that the locking body (14) is provided with releasable latching means comprising axial support means (40) adapted to cooperate with a first side (36) of the keeper, and at least one retractable locking ball (42) adapted to cooperate with the second side (38) of the keeper, and in that when the bolt assembly (12) is secured, the anti-jagging ring (76) extends axially between the support means (40) and the ball (42), being adjacent to the first side (36) of the keeper.

3. Locking mechanism according to claim 2,
characterised in that the bolt assembly (12) further comprises means (54) for radially moving the ball (42) between a retracted position in which the bolt assembly (12) is released and a projecting position for locking this bolt assembly towards which the ball is resiliently biased and wherein the ball cooperates with the second side (38) of the keeper, in that the axial support means comprise a support socket (44) mounted to be axially slidable around the locking body (14) and the anti-jagging ring (76) whilst being displaceable counter to a resilient restoring force for moving this socket from a bolt assembly release position in which the socket (44) covers the ball (42), holding it in the retracted position, towards a locking position for the bolt assembly (12), wherein the socket (44) is axially spaced from the ball (42), the latter being in the projecting position, and in that the anti-jagging ring (76) comprises means (80 to 84) for retaining the support socket (44) in its release position for the bolt assembly (12).

4. Locking mechanism according to claim 3,
characterised in that the retaining means comprise complementary axial abutments (80 to 84) provided on opposing surfaces of the anti-jagging ring (76) and the socket (44).

5. Locking mechanism according to claim 4,
characterised in that the complementary abutments comprise at least one radial projection (80, 82) which is formed in the outer surface of the ring (76) and a shoulder (84) which is formed in the inner surface of the support socket (44) and which defines one end of a release counterbore (86) for the radial projection (80, 82).

6. Locking mechanism according to claim 5,
characterised in that the radial projection (80, 82) is defined by a tab cut out from the anti-jagging ring (76) and folded towards the outside of said ring.

7. Locking mechanism according to claim 6,
characterised in that the anti-jagging ring (76) has two diametrically opposite tabs (80, 82).

8. Locking mechanism according to any one of claims 2 to 7, characterised in that the latching means comprise five angularly spaced balls (42).

9. Locking mechanism according to any one of the preceding claims, characterised in that the anti-jagging ring (76) is made of sprung steel.

10. Arrangement of a locking mechanism according to any one of the preceding claims, characterised in that the bolt assembly (12) is integral with a base (26) of a seat for a motor vehicle and the keeper is integral with the floor (30) of the vehicle.
